# EUROPEAN PATENT APPLICATION

(11) **EP 1 967 704 A1**
(43) Date of publication of application: **10.09.2008**
(21) Application number: 08004025.6
(22) Date of filing: 04.03.2008
(51) Int. Cl.: F01L 1/24, F16K 15/04

(54) **Lash adjuster**

(30) Priority: 09.03.2007 JP 2007060229
(71) Applicant: Otics Corporation, 444-0392 Aichi Nishio-shi (JP)
(72) Inventor: Fujii, Hiroki, Nishio-shi Aichi 444-0392 (JP); Todo, Kimihiko, Nishio-shi Aichi 444-0392 (JP); Hirano, Tomiyasu, Nishio-shi Aichi 444-0392 (JP)
(74) Representative: Müller-Boré & Partner Patentanwälte

(57) **Abstract**

A lash adjuster includes a plunger and a cylinder. The cylinder includes a high-pressure chamber defined therein. The plunger has a valve port provided through a bottom wall thereof. The valve port includes a seat. A spherical valve body is accommodated in the high-pressure chamber. The valve body is made of ceramic material containing silicon nitride. The valve body is arranged to have a surface roughness average (Ra) of equal to or less than 0.13 µm. The valve body is arranged to have a contact pressure of equal to or lower than 1386 Mpa with the seat in a state where the valve port is closed by the valve body.

## Description

The present invention relates to a hydraulic lash adjuster for use with a valve mechanism of an internal combustion engine.

A known hydraulic lash adjuster, such as the one disclosed in Japanese Unexamined Patent Application Publication 05-288020, includes a cylinder and a plunger. The cylinder is fixed in a cylinder head. The plunger is disposed in the cylinder. The plunger can move up and down in the cylinder. The upper end of the plunger protrudes beyond the cylinder and supports a rocker arm.

The plunger includes a low-pressure chamber therein, and the cylinder includes a high-pressure chamber therein. The low-pressure chamber and the high-pressure chamber are separated by a bottom wall of the plunger. The bottom wall of the plunger has a valve port. The valve port includes a seat that is contacted with a valve body.

Operating fluid is supplied from an oil gallery defined in the cylinder head to the low-pressure chamber. The low-pressure chamber is filled with operating fluid. Operating fluid is supplied from the low-pressure chamber via the valve port to the high-pressure chamber. The high-pressure chamber is also filled with operating fluid.

A spherical valve body is accommodated in the high-pressure chamber. The valve body is urged by a spring in a direction to close the valve port. The valve body and the spring constitute a check valve for opening and closing the valve port.

When the rocker arm is depressing the plunger, the valve port is closed by the valve body. The high-pressure chamber is sealed then, and thus the pressure of the operating fluid filled in the high-pressure chamber prevents the downward movement of the plunger. Reversely, when the plunger moves upwardly, the high-pressure chamber is enlarged. The valve body then moves downwardly to open the valve port, which allows operating fluid to flow from the low-pressure chamber into the high-pressure chamber. The high-pressure chamber thus remains filled with the operating fluid.

In the known lash adjuster described above, the valve body collides with the seat of the valve port every time the spherical valve body closes the port. Because the valve body is made of steel (e.g. JIS-SUJ2 steel), the specific gravity thereof is significantly high. Therefore, it is a problem that the seat of the valve port wears out from repeated collision of the valve body therewith. In addition, it is also a problem that the valve body can get stuck in the seat of the valve port.

One of purposes of the present invention is to prevent the valve body from getting stuck in the seat of the valve port.

In accordance with an aspect of the present invention, a lash adjuster includes a cylinder disposed in a cylinder head, a plunger fitted in the cylinder including a bottom wall, a low-pressure chamber defined in the plunger, a high-pressure chamber defined in the cylinder, a spherical valve body accommodated in the high-pressure chamber, a valve port provided through the bottom wall of the plunger, and a spring capable of urging the valve body toward the valve port. The low-pressure chamber and the high-pressure chamber are capable of holding operating fluid. The low-pressure chamber and the high-pressure chamber are separated by the bottom wall of the plunger. The valve body and the spring constitute a check valve. The check valve can open and close the valve port. The valve body is made of ceramic material containing silicon nitride. The valve body has a surface roughness average (Ra) of equal to or less than 0.13 µm. The valve port includes a seat thereon. The valve body has a contact pressure of equal to or lower than 1386 MPa with the seat.

With this aspect of the present invention, friction between the seat and the valve body is reduced. This prevents the seat from wearing out. This also prevents the valve body from getting stuck in the seat.

In accordance with another aspect of the present invention, the spring has an urging direction to urge the valve body. A periphery of the valve body has a contact point with the seat. A first line is a line parallel to the urging direction of the spring. A second line is a line passing through a center of the valve body and the contact point of the valve body with the seat. The first line and the second line forms an angle ranging from 30° to 75°, preferably.

With this aspect of the present invention, the valve body is prevented from being wedged into the seat of the valve port. This serves for more reliably preventing the valve body from getting stuck in the seat.

Fig. 1 is a cross-sectional view showing a state where a lash adjuster is fixed in a cylinder head;
Fig. 2 is a cross-sectional view of the lash adjuster;
Fig. 3 is an enlarged cross-sectional view showing a state where a valve port is closed by a valve body; and
Fig. 4 is an enlarged cross-sectional view showing a state where the valve port is opened by the valve body.

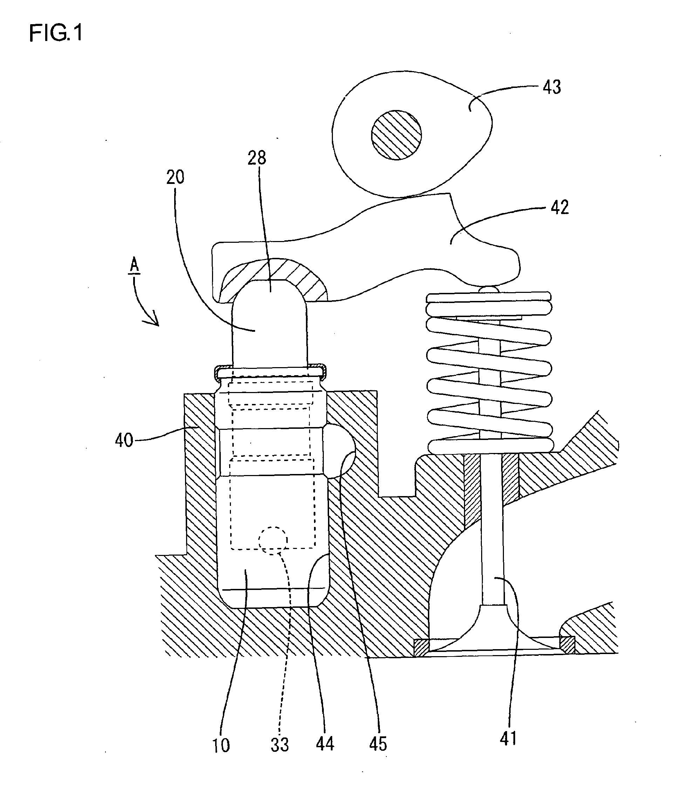

A preferred embodiment in accordance with the present invention will be now described with reference to Figs. 1 through 4. A hydraulic lash adjuster A of the present embodiment is used with a valve mechanism of an internal combustion engine. The internal combustion engine is, for example, an engine of an automobile.

As shown in Fig. 1, the valve mechanism includes an engine valve 41, the lash adjuster A, a rocker arm 42, and a cam 43. As the cam 43 rotates, the rocker arm 42 pivots up and down about an upper end of the lash adjuster A. The rocker arm 42 then actuates the engine valve 41 up and down. Note that such a valve mechanism is well known.

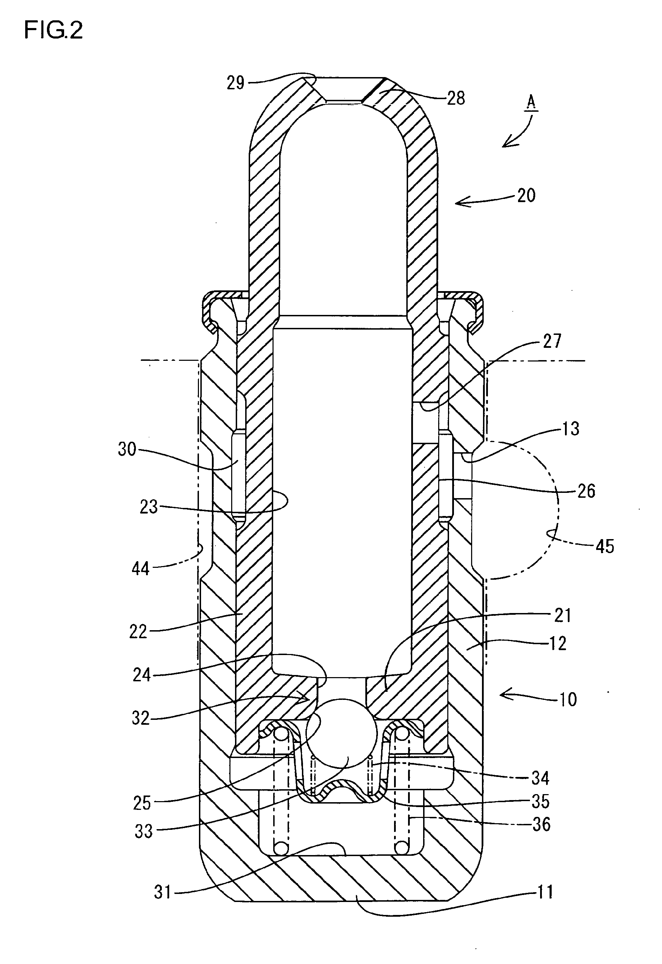

As shown in Fig. 2, the lash adjuster A includes a cylinder 10 and a plunger 20.

The cylinder 10 includes a circular bottom wall 11 and a cylindrical peripheral wall 12. The cylinder 10 is disposed in a cylinder hole 44 provided in an upper surface of a cylinder head 40.

The plunger 20 includes a circular bottom wall 21 and a cylindrical peripheral wall 22. The plunger 20 is fitted in the cylinder 10.

The cylinder 10 has a high-pressure chamber 31 defined therein. The plunger 20 has a low-pressure chamber 23 defined therein. The low-pressure chamber 23 and the high-pressure chamber 31 are separated by the bottom wall 21 of the plunger 20.

The peripheral wall 12 of the cylinder 10 has a hole 13 provided through the peripheral wall 12 from the inside to the outside thereof. The hole 13 is in communication with an oil gallery 45 defined in the cylinder head 40.

The bottom wall 21 of the plunger 20 has a circular valve port 24 provided through the bottom wall 21 from the upper side to a lower side thereof.

The valve port 24 includes a seat 25 on a perimeter of a lower opening edge (an opening edge on the high-pressure chamber 31 side) thereof. The seat 25 has a shape enlarged in diameter toward the lower end thereof. The seat 25 is substantially arcuate shaped in axial cross section.

The plunger 20 includes a narrow portion 26 around the circumference of the peripheral wall 22 thereof. The narrow portion 26 has a hole 27 provided through the peripheral wall 22 from the inside to the outside thereof.

The plunger 20 includes a hemispherical (domical) support portion 28 at the upper end thereof. Overhanging on the support portion 28 is the rocker arm 42. The support portion 28 serves as a pivot support for the rocker arm 42. That is, the rocker arm 42 pivots about the support portion 28. The support portion 28 has a circular hole 29 provided through the top of the support portion 28 from the upper side to the lower side thereof.

The plunger 20 is movable up and down in the cylinder 10. An outer periphery of the plunger 20 is slidably contacted on an inner periphery of the cylinder 10. The narrow portion 26 of the plunger 20 and the inner periphery of the cylinder 10 defines a passage 30 therebetween. The passage 30 is in communication with both the hole 13 and the hole 27.

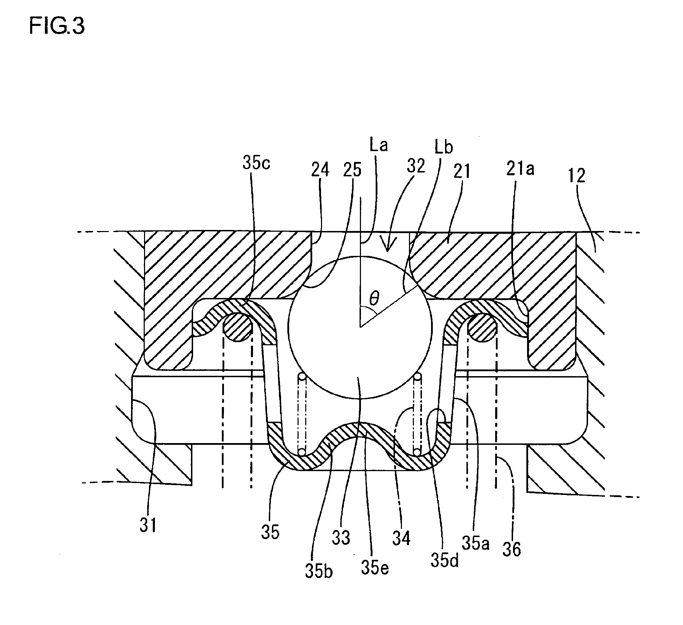

As shown in Fig. 3, a lower surface (the surface on the high-pressure chamber side) of the bottom wall 21 of the plunger 20 includes a concavity 21a. The axis of the concavity 21a matches the axis of the valve port 24. The inside diameter of the concavity 21a is larger than the diameter of the valve port 24.

Accommodated in the high-pressure chamber 31 are a valve body 33 and a spring 34. The valve body 33 is urged by the spring 34 in a direction to close the valve port 24, i.e. upwardly. The valve body 33 and the spring 34 constitute a check valve 32 for opening and closing the valve port 24.

The valve body 33 is a spherical body having the outside diameter larger than the inside diameter of the valve port 24. The valve body 33 is accommodated in a ball cage 35.

The ball cage 35 includes a tubular portion 35a, a bottom portion 35b, and a spring retainer 35c. The axis of the tubular portion 35a mates the axis of the valve port 24. The tubular portion 35a is closed off at the lower end thereof by the bottom portion 35b. The spring retainer 35c extends from an upper end of the tubular portion 35a radially toward the outside.

The tubular portion 35a has a plurality of slits 35d provided therethrough from the inside to the outside thereof.

The bottom portion 35b has a raised portion 35e formed at the substantial center thereof. The raised portion 35e is raised upwardly.

The spring retainer 35c is press-inserted in the concavity 21a of the bottom wall 21 of the plunger 20. The ball cage 35 is thus fixed to the bottom wall 21 of the plunger 20.

The spring 34 is arranged for urging the valve body 33. The spring 34 is disposed in a same axis with the valve port 24. The spring 34 is constituted by a compression spring. The spring 34 is positioned between the bottom portion 35b of the ball cage 35 and the valve body 33. The spring 34 urges the valve body 33 upwardly. That is, the spring 34 urges the valve body 33 in the direction that the valve body 33 closes the valve port 24.

A lower end of the spring 34 is engaged around the circumference of the raised portion 35e. This prevents the spring 34 from displacement in a horizontal direction (a direction perpendicular to the axis). Furthermore, this retains the spring 34 in the position where the axis of the spring 34 matches the axis of the valve body 33.

When the valve body 33 moves too much downwardly, the valve body 33 comes in contact with a top of the raised portion 35e. When the valve body 33 comes in contact with the top of the raised portion 35e, further downward over-movement of the valve body 33 is not caused. Deformation of the spring 34 from over-compression is therefore prevented.

When the valve body 33 is in an uppermost position, the valve body 33 is in contact with the seat 25, and the valve port 24 is closed by the valve body 33. When the valve body 33 is out of the uppermost position, the valve body 33 is apart from the seat 25, and the valve port 24 is opened by the valve body 33.

Also accommodated in the high-pressure chamber is a spring 36. The spring 36 urges the plunger 20 upwardly.

The spring 36 is constituted by a compression spring. The spring 36 is disposed in a same axis with the valve port 24. The spring 36 is positioned between the spring retainer 35c of the ball cage 35 and the bottom wall 11 of the cylinder 10.

The oil gallery 45 is defined in the cylinder head 40. Operating fluid flows through the oil gallery 45, the hole 13, the passage 30, and the hole 27, in that order, into the low-pressure chamber 23. The operating fluid which has flown into the low-pressure chamber 23 then flows through the valve port 24 into the high-pressure chamber.

When the rocker arm 42 is depressing the plunger 20, the valve body 33 is contacted with the seat 25, and the valve port 24 is closed by the valve body 33. The high-pressure chamber 31 is sealed in this state, and pressure of the operating fluid filled in the high-pressure chamber prevents the downward movement of the plunger 20 (shown in Fig. 3).

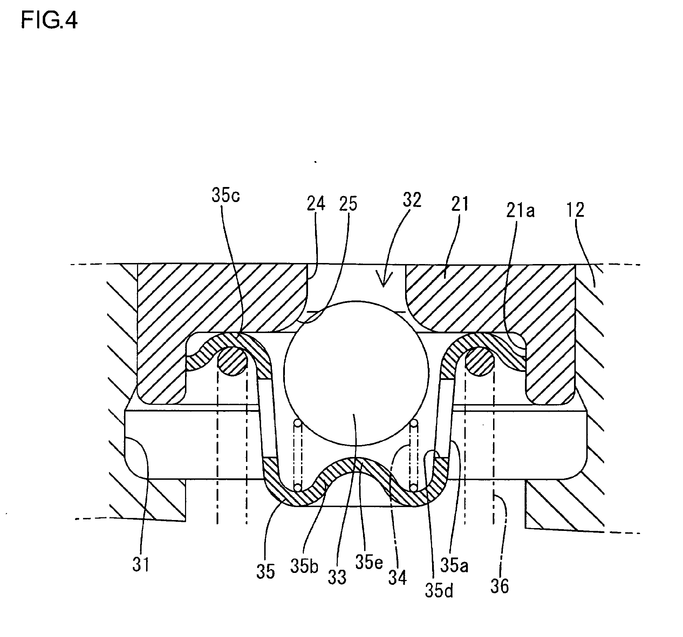

Reversely, as the plunger 20 moves upwardly, the high-pressure chamber is enlarged, and the valve body 33 moves downwardly. When the valve body 33 moves downwardly, the valve body 33 is apart from the seat 25, and thus the valve port 24 is opened by the valve body 33 (shown in Fig. 4). The operating fluid in the low-pressure chamber 23 then flows through the valve port 24 into the high-pressure chamber 31. With the inflow of operating fluid into the high-pressure chamber 31, the high-pressure chamber 31 remains filled with operating fluid.

As the plunger 20 moves upwardly and then stops, the valve body 33 moves upwardly with the urging force of the spring 34. When the valve body moves upwardly and then comes in contact with the seat 25, the valve body 33 closes the valve port 24. The high-pressure chamber 31 thus remains filled with operating fluid, with remaining sealed.

As above described, the valve body 33 that constitutes the check valve 32 collides with the seat 25 of the valve port 24 every time the check valve 32 closes the valve port 24.

In known lash adjusters, valve bodies are made of steel (e.g. SUJ2 steel), and have higher specific gravity as well as larger inertial mass. Therefore, seats can wear out from repeated collision of the valve bodies therewith. Furthermore, the valve bodies can get stuck in the seats.

In the lash adjuster A of the present embodiment, the valve body 33 is made of ceramics containing silicon nitride. The valve body 33 made of ceramics provides strong hardness.

Therefore, even when the valve body 33 collides with the seat 25, the valve body 33 does not deform or crack. The valve body 33 made of ceramics containing silicon nitride can sufficiently perform the function to open and close the valve port 24.

The valve body 33 has significantly lower specific gravity than the valve body made of steel. Likewise, the valve body 33 has significant smaller inertial mass than the valve body made of steel.

Therefore, even when the valve body 33 repeatedly collides with the seat 25, the seat does not easily wear out. Furthermore, the valve body 33 is prevented from getting stuck in the seat 25.

Mechanical properties of the ceramic material containing silicon nitride, which forms the valve body 33 of the lash adjuster A in accordance with the present embodiment, are preferably as follows:
Specific gravity: 3.2; hardness: 1500 [HV]; linear expansion coefficient: 3.2 * 10⁻⁶ [1/°C]; heatproof temperature: 800 [°C].

As a comparison, the mechanical characteristics of the steel (SUJ2 steel), which forms the valve body of one of the known lash adjusters, are as follows:
Specific gravity: 7.8; hardness: 750 [HV]; linear expansion coefficient: 12.5 * 10⁻⁶ [1/°C]; heatproof temperature: 180 [°C].

In the lash adjuster A of the present embodiment, in order to prevent the valve body 33 from getting stuck in the seat 25, the valve body 33 is arranged to have a surface roughness average (Ra) of equal to or less than 0.13 µm.

In the lash adjuster A of the present embodiment, in order to prevent the valve body 33 from getting stuck in the seat 25, the valve body 33 is arranged to have a contact pressure of equal to or lower than 1386 Mpa with the seat 25. Note that the contact pressure referred herein is a contact pressure applied between the valve body 33 and the valve port 24 during when the valve port 24 is closed by the valve body 33. The contact pressure is produced by resilience of the spring 34.

The plunger 20 is formed of carbon steels for machine structural use, chromium-molybdenum steel, chromium steel, or the like. The plunger 20 has a hardness of equal to or higher than 600 [HV], preferably. The plunger 20 includes the seat 25.

As shown in Fig. 3, a first line La is a line parallel to the urging direction that the spring 34 urges the valve body 33. The first line La passes through the center of the valve body 33. The first line La passes also through the axis of the valve port 24. A second line Lb is a line passing through the center of the valve body 33. The second line Lb passes also through a contact point of the valve body 33 with the seat 25. The contact point is a point of a ring contact of the valve body 33 with the seat 25. An angle θ formed between the first line La and the second line Lb is arranged to be between from 30° to 75°.

In order to prove the effects of the lash adjuster A of the present embodiment, experiments as below were performed.
(1) The valve body 33 was arranged to have the surface roughness average (Ra) of 0.13 µm.
(2) The valve body 33 was arranged to have the contact pressure of 1386 MPa with the seat 25 in the state where the valve port 24 is closed by the valve body 33.
(3) The angle θ formed between the first line La and the second line Lb was arranged to be 25.5°.
(4) The seat 25 was arranged to have a radius of curvature of 0.8 mm in axial cross section.
(5) The valve body 33 was arranged to have the outside diameter of 3.0 mm.
(6) The valve port 24 was arranged to have the inside diameter of 2.05 mm.
(7) The ring contact of the valve body 33 with the seat 25 made in the state where the valve port 24 is closed by the valve body 33 was arranged to have a diameter of 2.38 mm.

Under the above conditions (1) through (7), collision of the valve body 33 with the seat 25 was repeatedly operated. Specifically, collision of the valve body 33 with the seat 25 was repeated 10000000 times per day and for five days continuously in total.

As a result of the experiments, such a phenomenon that the valve body 33 gets stuck in the seat 25 was not caused. Note that the condition of repeating collision 10000000 times per day and for five days in total satisfies the criterion of useful life that is required for a commonly-used lash adjuster.

In the lash adjuster A of the present embodiment, the surface roughness average (Ra) of the valve body 33 is equal to or less than 0.13 µm, and the contact pressure of the valve body 33 with the seat 25 is equal to or lower than 1386 MPa. Therefore, friction between the seat 25 and the valve body 33 is reduced. Furthermore, because the wearing progress of the seat 25 is restrained, the valve body 33 is prevented from getting stuck in the seat 25.

In the lash adjuster A of the present embodiment, the angle θ formed between the first line La and the second line Lb is equal to or smaller than 75°. Therefore, the valve body 33 is prevented from being wedged into the seat 25 or the valve port 24. This serves for more reliably preventing the valve body 33 from getting stuck in the seat 25.

## Claims

1. A lash adjuster, comprising:
a cylinder disposed in a cylinder head;
a plunger fitted in the cylinder, the plunger including a bottom wall;
a low-pressure chamber defined in the plunger;
a high-pressure chamber defined in the cylinder;
a spherical valve body accommodated in the high-pressure chamber;
a valve port provided through the bottom wall of the plunger; and
a spring, the spring being capable of urging the valve body toward the valve port,
wherein the low-pressure chamber and the high-pressure chamber are capable of holding operating fluid,
wherein the low-pressure chamber and the high-pressure chamber are separated by the bottom wall of the plunger,
wherein the valve body and the spring constitute a check valve, the check valve being capable of opening and closing the valve port,
wherein the valve body is made of ceramic material containing silicon nitride,
wherein the valve body has a surface roughness average (Ra) of equal to or less than 0.13 µm,
wherein the valve port includes a seat thereon, and
wherein the valve body has a contact pressure of equal to or lower than 1386 MPa with the seat.

2. The lash adjuster according to claim 1,
wherein the spring has an urging direction to urge the valve body,
wherein a periphery of the valve body has a contact point with the seat,
wherein a first line is a line parallel to the urging direction of the spring,
wherein a second line is a line passing through a center of the valve body and the contact point of the valve body with the seat, and
wherein the first line and the second line forms an angle, wherein the angle ranges from 30° to 75°.
